**Europäisches Patentamt**

**European Patent Office**

**Office européen des brevets**

(11) Veröffentlichungsnummer: **0 449 184 A1**

(12) **EUROPÄISCHE PATENTANMELDUNG**

(21) Anmeldenummer: **91104703.3**

(22) Anmeldetag: **26.03.91**

(51) Int. Cl.5: **C02F 1/28**, C02F 9/00, C02F 1/44, C05F 3/00, C05F 11/02

(30) Priorität: **28.03.90 DE 4009886**

(43) Veröffentlichungstag der Anmeldung: **02.10.91 Patentblatt 91/40**

(84) Benannte Vertragsstaaten: **DE FR IT NL**

(71) Anmelder: **Rheinbraun Aktiengesellschaft Stüttgenweg 2 W-5000 Köln 41(DE)**

(72) Erfinder: **Faber, Wolfgang, Dr.**
Im Rosengarten 19
W-5020 Frechen(DE)
Erfinder: **Felgener, Gerd W., Dipl.-Ing.**
Scheidweg 60
W-4048 Grevenbroich(DE)
Erfinder: **Hültenschmidt, Norbert Johannes**
Bösperder Weg 23
W-5750 Menden(DE)

(74) Vertreter: **Koepsell, Helmut, Dipl.-Ing.**
Mittelstrasse 7
W-5000 Köln 1(DE)

(54) **Verfahren zum Behandeln von Gülle.**

(57) Die Erfindung betrifft ein Verfahren zum Behandeln von Gülle (5), bei welchem letzterer Huminsäure enthaltende Braunkohle (6) zugemischt wird und nach einer ausreichenden Einwirkzeit die Feststoffe (1) von der flüssigen Phase (9) des Gemisches abgetrennt werden. Bestimmte Inhaltsstoffe der Gülle, die schädlich oder in zu großer Konzentration vorliegen, werden dadurch an die Braunkohle (6) gebunden, so daß die resultierende flüssige Phase (9) einen merklich geringeren Gehalt an diesen Stoffen aufweist als die flüssige Phase (9) der unbehandelten Gülle (5). Sowohl die Feststoffe (1) als auch die nach dem Abtrennen der letzteren gewonnene flüssige Phase (9) können im Bedarfsfall weiteren Behandlungen unterzogen werden.

FIG.1

Die Erfindung betrifft ein Verfahren zum Behandeln von Gülle mit einem feinkörnigen, schüttfähigen, kohlenstoffhaltigen Material.

Als Gülle werden allgemein die anfallenden Exkremente aus einstreuarmer bis einstreuloser Nutztierhaltung mit mehr oder weniger großem Wasserzusatz bezeichnet. Demgegenüber ist Jauche feststoffbefreiter Abfall (hauptsächlich Harn) aus der Tierhaltung, der daneben noch Spül- und Niederschlagswasser enthält. Ein Gemisch aus Einstreu, Kot und Harn der Tiere wird als Stallmist bezeichnet.

Unter dem Begriff Gülle im Sinne dieser Anmeldung sind sowohl eine homogenisierte Gülle, d. h. eine Gülle, in welcher Feststoffe und Flüssigkeit innig miteinander vermischt sind, als auch Güllegemische zu verstehen, bei denen es sich um Gülle unterschiedlicher Herkunft, beispielsweise Rinder-, Schweine- und Geflügelgülle handeln kann. Ferner umfaßt dieser Begriff auch vorbehandelte Gülle bzw. Güllegemische. Die Vorbehandlung kann beispielsweise in einer Fermentierung bestehen. Der Trockensubstanzgehalt von Gülle liegt im allgemeinen im Bereich zwischen 1 und 20 Gew.-%, überwiegend zwischen 4 und 10 Gew.-%.

In den letzten Jahrzehnten wurde eine deutliche Zunahme der Nitratgehalte im Grundwasser und im Trinkwasser festgestellt. Als wesentlicher Grund dafür wurde die übermäßige Verwendung von Gülle und Jauche in der Landwirtschaft erkannt. Während in neuzeitlichen landwirtschaftlichen Betrieben immer weniger Mist anfällt, steigt der Anfall an Gülle beträchtlich. Die Gülle wurde bis vor wenigen Jahren uneingeschränkt als Dünger auf landwirtschaftlichen Flächen ausgebracht.

Neben der schädlichen Einbringung von Nitraten in das Grund- und Trinkwasser verursacht die Gülle noch weitere Umweltbelastungen, wenn sie auf Böden ausgebracht wird, z. B. Verunreinigung der Luft durch Geruchsstoffe (übler Geruch beim Versprühen der Gülle) und Schadgase (z. B. $H_2S$, Mercaptane). Darüber hinaus werden die Böden überdüngt mit der Folge, daß eine starke Anreicherung z. B. mit Phosphaten oder Kalium eintritt. Bei Verwendung von Hühnergülle erfolgt eine merkliche Anhebung des pH-Wertes des Bodens. Darüber hinaus können auch Pflanzenschäden durch Überdüngung verursacht werden.

Zur Vermeidung dieser Schwierigkeiten ist es bereits vorgeschlagen worden, Gülle durch eine Filterschicht, die aus Verbrennungsrückständen besteht, zu leiten und danach durch Elektrolyse zu entsalzen. Dieses Verfahren ist sehr aufwendig, wobei zudem nicht sichergestellt ist, daß die flüssige Phase nach Passieren der Filterschicht eine merklich geringere Konzentration an Schadstoffen oder solchen Stoffen enthält, die aufgrund ihrer hohen Konzentration schädliche Auswirkungen haben.

Andere bekannte Verfahren sehen vor, der Gülle Feststoffe in einer solchen Menge hinzuzufügen, daß die flüssige Phase durch die hinzugefügten Feststoffe vollständig gebunden wird. Dies gilt z. B. für das Verfahren gemäß DD 260.059 A1, bei welchem Stroh und Gülle im Verhältnis 4:1 gemischt werden. Nach Beendigung der Rotte- und Eindickungsphase dieses Gemisches wird es mit einem Asche-Kohle-Gemisch vermengt. Dieses Verfahren ist sehr zeitaufwendig. Zudem wird, da es zur Herstellung eines festen Düngemittels dienen soll, dabei relativ wenig Gülle verbraucht. Eine Phasentrennung ist bei dem bekannten Verfahren überhaupt nicht vorgesehen.

Letzteres gilt auch für das Verfahren zur umwelffreundlichen Beseitigung von Rinder- und/oder Schweinegülle gemäß DE 38 05 864 A1. Bei diesem Verfahren wird die Gülle in einem Tunnelreaktor mit einem Kohlenstoffträger, z. B. Sägemehl, behandelt. Nach Beendigung des Verfahrens, das sich über einen Zeitraum von 2 - 6 Wochen hinzieht, wird Kompost gewonnen. Bei diesem Verfahren werden nur geringe Mengen, gemessen an dem hinzuzufügenden kohlenstoffhaltigen Material, an Gülle verbraucht, deren flüssiger Anteil mit 90-94% angegeben wird.

Demzufolge liegt der Erfindung die Aufgabe zugrunde, ein Verfahren verfügbar zu machen, welches es erlaubt, mit relativ einfachen Mitteln große Güllemengen so zu behandeln, daß insbesondere die flüssige Phase derselben eine Zusammensetzung erhält, die es erlaubt, merklich größere Mengen dieser flüssigen Phase als dies bisher bei Gülle möglich war, auf Böden aufzubringen, ohne daß das Auftreten der vorstehend beschriebenen Beeinträchtigungen zu befürchten ist. Dabei soll auch die Möglichkeit bestehen, im Bedarfsfall die Komponenten der Gülle weiterzubehandeln, so daß die entstehenden Endprodukte ohne Einschränkungen verwendbar sind und beispielsweise Wasser mit einer Qualität erhalten wird, welches ohne weiters in die Vorfluter geleitet werden kann.

Zur Lösung dieser Aufgabe schlägt die Erfindung vor, daß die Gülle mit Huminsäure enthaltender Braunkohle vermischt und danach die flüssige Phase vom Feststoff des Gemisches abgetrennt wird.

Eingehende Untersuchungen haben ergeben, daß Huminsäure enthaltende Braunkohle ein vorzügliches Mittel zum Konditionieren der flüssigen Phase von Gülle darstellt. Dieses Konditionieren besteht im wesentlichen darin, daß bestimmte Inhaltsstoffe der Gülle an die Braunkohle gebunden werden. Dabei kann es sich um die Sorption von suspendierten oder kolloidal gelösten Inhaltsstoffen durch die Braunkohle, aber auch um die Fixierung von Ionen, d.h., die Anlagerung von Ionen an die Braunkohle aufgrund eines Ionenaustausch-Mechanismus handeln. Dabei ist insbesondere die Anlagerung von Kationen von Bedeutung, die offenbar an den Carboxyl- und Hydroxylgruppen der in der Braunkohle enthaltenden Verbindungen angelagert werden. So werden Ammonium ($NH_4^+$) und Kalium ($K^+$) durch die Huminsäuren chemisch adsorbiert, und zwar unter Bildung von Humaten. Die enthaltenen Phosphorverbindungen und CSB-Inhaltsstoffe werden lediglich physikalisch adsorbiert, wobei die verhältnismäßig große Oberfläche der Braunkohle eine wesentliche Rolle spielt.

Für das Konditionieren der Gülle kommen huminsäurehaltige Stoffe, insbesondere Rohbraunkohle und/oder getrocknete Braunkohle und/oder Torf in Betracht. Die Wahl zwischen diesen Braunkohlensorten wird möglicherweise von der Länge des Weges abhängen, über den die Braunkohle zum Ort der Verwendung transportiert wird, da Rohbraunkohle zwangsläufig einen wesentlich höheren Wassergehalt - bis zu 65% - aufweist, wohingegen getrocknete Braunkohle in Abhängigkeit vom Grad der Trocknung noch beispielsweise 10 - 20% Wasser enthalten kann.

Dementsprechend können auch die der Gülle zugemischten Mengen an Braunkohle in Abhängigkeit von der Beschaffenheit der letzteren abhängen. So wird der angestrebte Effekt bei Verwendung von Trockenbraunkohle im allgemeinen bereits dann erreicht werden, wenn etwa 5 - 10 Gew.-% der Gülle zugesetzt werden. Bei Rohbraunkohle kann es erforderlich sein, etwa 10 - 15 % zuzusetzen. In jedem Fall wird nur so viel Braunkohle zugesetzt, daß der größere Teil der flüssigen Bestandteile der Gülle ungebunden bleibt.

Für das Eintreten des angestrebten Effektes, also der Bindung wenigstens eines Teils der Schadstoffe oder der in zu großen Mengen vorliegenden Stoffe an die Braunkohle, spielt auch deren Korngröße eine Rolle. Die der Gülle zugemischte Braunkohle sollte eine möglichst große Oberfläche aufweisen, um so möglichst viele Schadstoffe und dergleichen binden zu können. Da mit abnehmender Korngröße die Oberfläche zunimmt, wird es im allgemeinen zweckmäßig sein, Braunkohle in einer Körnung bis zu 6 mm zu verwenden, wenngleich dies keine unbedingt einzuhaltende Obergrenze ist, da beim Mischvorgang, beispielsweise durch Verrühren der Braunkohle in der Gülle, zwangsläufig eine gewisse Zerkleinerung der Braunkohlenkörner durch Abrieb, Zerbrechen und dergleichen eintritt. Andererseits ist bei der Wahl der Korngröße der Braunkohle auch zu berücksichtigen, daß die der Gülle zugemischte Braunkohle mit den in der Gülle von vornherein vorhandenen Feststoffen nach einer gewissen Verweilzeit von der flüssigen Phase der Gülle möglichst weitgehend abgetrennt werden soll, um so die an den Braunkohlenkörnern angelagerten Schadstoffe und dergleichen aus der flüssigen Phase zu entfernen. Dies, also der Trennvorgang, setzt wiederum voraus, daß die Braunkohle in nicht zu kleiner Körnung vorliegt, da mit abnehmender Körnung, insbesondere im Staubbereich, die Trennung der festen Phase von der flüssigen Phase schwieriger und aufwendiger wird. Dies hängt natürlich auch ab von den Apparaten und Einrichtungen, die für die Trennung der festen Phase von der flüssigen Phase benutzt werden. - Für das Ausmaß der Bindung von schädlichen Stoffen und dergleichen an die Braunkohle können ferner die Verweilzeit der Braunkohle in der Gülle und die Intensität der Durchmischung von Braunkohle und Gülle eine Rolle spielen. Im allgemeinen wird es zweckmäßig sein, das Gemisch aus Braunkohle und Gülle bis zum Abtrennen der Feststoffe z. B. durch Rühren zu agitieren. In Abhängigkeit von den jeweiligen Gegebenheiten kann die Verweilzeit der Braunkohle in der Gülle 2 - 120 min betragen. Im allgemeinen wird die Verweilzeit bei guter Vermischung zwischen 15 und 45 min liegen.

Jedenfalls sind die Gehalte an schädlichen Bestandteilen der durch dieses Konditionieren gewonnenen flüssigen Phase erheblich geringer als die Gehalte der Ausgangsgülle an derartigen schädlichen Substanzen. So wird der Bereich an CBS-Inhaltsstoffen um mehr als die Hälfte verringert. Der Gehalt an Ammonium erfährt eine Verringerung um etwa zwei Drittel, der an phosphorhaltigen Substanzen um mehr als 90%. Zwar wird eine Flüssigkeit mit derartigen Restgehalten immer noch nicht in den Vorfluter gegeben werden können, jedoch stellt diese Flüssigkeit im Vergleich zum Ausgangsprodukt, also der nicht konditionierten flüssigen Phase der Gülle, bereits eine wesentliche Verbesserung dar, da beispielsweise bei Verregung auf landwirtschaftlich genutzten Böden eine wesentlich größere Menge, ggf. weit mehr als die doppelte Menge pro Flächeneinheit, verregnet werden kann.

Das Abtrennen des Feststoffes von der flüssigen Phase kann unter Verwendung bekannter Mittel erfolgen, z. B. Siebbandpressen, Siebtrommelpressen, Siebzentrifugen, Dekantierzentrifugen und Becherzentrifugen. Ein Kriterium für die Wahl des Mittels zum Abtrennen des Feststoffes von der flüssigen Phase kann der gewünschte Rest-Flüssigkeitsgehalt des abgetrennten Feststoffes sein. Dieser kann ggf. ohne weitere Nachbehandlung bereits als Bodenverbesserer verwendet werden, ohne daß dazu noch eine Nachbehandlung erforderlich wäre. Die Verwendung kann sofort nach dem Abtrennen, ggf. also noch in feuchtem Zustand erfolgen. Es ist aber auch möglich, den Feststoff einige Monate zu lagern, ggf. auch in einem besonderen Vorgang zu trocknen und zu desinfizieren, bevor er als Bodenverbesserer verwendet wird. Es besteht aber auch die Möglichkeit, eine Nachbehandlung durch Kompostieren durchzuführen, wobei Huminstoffe entstehen, die zunächst aus niedermolekularen, später dann aus höhermolekularen Verbindungen, beispielsweise durch Chelatisierung, Oxidation, Polymerisation und sogenannten autolysierten Organismen bestehen.

Von besonderer Bedeutung ist, daß bei Verwendung der aus der Gülle abgetrennten Feststoffe, die ein Gemisch aus den Feststoffen der Ausgangsgülle und der zugesetzten Braunkohle darstellen, als Bodenverbesserer oder dgl. Ammonium und Kalium bzw. sich daraus bildende Verbindungen ohne Beeinträchtigung der Umwelt oder des Bodens aus diesen Feststoffen an den Boden abgegeben werden. Entscheidend ist dabei, daß sich aufgrund der Beschaffenheit der Braunkohle zu keinem Zeitpunkt Ammoniak ($NH_3$) bildet. Die Phosphate werden nur in solchem Umfang an den Boden abgegeben, wie sie von den Pflanzen aufgenommen werden. Die im Feststoff enthaltenen CSB-Substanzen werden durch aerobe Umsetzung zu unschädlichen Verbindungen, beispielsweise $CO_2$ und Wasser, umgewandelt.

Die auf die vorbeschriebene Weise gewonnenen Feststoffe können zum Beispiel in der Landwirtschaft, im Forstbau, im Gartenbau, aber auch als Faserstoff für Füllstoffe in der Spanplatten- und Ziegelindustrie Verwendung finden.

Es war bereits erwähnt worden, daß die abgeschiedenen Feststoffe z. B. durch Kompostieren weiterbehandelt werden können. Eine Möglichkeit der Weiterbehandlung besteht auch bezüglich der flüssigen Phase, die nach Abtrennen der Feststoffe erhalten wird, wenn die Gehalte der flüssigen Phase an Schadstoffen oder sonstigen unerwünschten Stoffen noch weiter verringert werden soll.

So kann die flüssige Phase nach Abtrennen des Feststoffes einer der oder aufeinanderfolgend wenigstens zwei der nachfolgenden Behandlungen unterzogen werden:

Reinigung unter Zufuhr eines sauerstoffhaltigen Gases, vorzugsweise Luft,

Vorfiltration unter Abtrennung eines flüssigen Filtrats und eines Feststoffes,

Umkehrosmose des flüssigen Filtrats in mindestens einer Stufe unter Abtrennung eines flüssigen Permeats und eines Konzentrats,

Eindampfen des ersten Konzentrats unter Bildung von Salz und Wasser und/oder Behandeln des ersten Konzentrats mit einem feinkörnigen schüttfähigen kohlenstoffhaltigen Material, vorzugsweise Huminsäure enthaltender Braunkohle, unter Bildung eines Feststoffes und/oder eines deponierbaren Stoffes.

In der Zeichnung ist ein Ausführungsbeispiel der Erfindung mit einigen Modifikationen im Schema dargestellt. Es zeigen:

Fig. 1    den grundlegenden Verfahrensablauf in Form eines Blockschaltbildes,

Fig. 2    eine andere Möglichkeit der Ausgestaltung eines Teils des Verfahrensablaufs,

Fig. 3    eine weitere Möglichkeit der Ausgestaltung eines Teils des Verfahrensablaufes.

In der Zeichnung sind Stoffe mit einem überwiegenden Anteil an fester Substanz durch einen ausgefüllten Pfeil, Stoffe mit einem überwiegenden Anteil an flüssiger Substanz durch einen offenen Pfeil und Stoffe mit einem überwiegenden Anteil an gasförmiger Substanz durch einen halboffenen Pfeil dargestellt. Die ausgezogenen Linien entsprechen dem grundlegenden Verfahrensablauf. Die unterbrochenen Linien kennzeichnen Modifikationen des grundlegenden Verfahrensablaufes. In allen Fällen wird Gülle 5, deren Feststoffanteil normalerweise zwischen 4 und 10% liegt, mit einem Konditionierungsmittel 6 in Form von Huminsäure enthaltender Braunkohle in einen Rührbehälter 7 eingebracht und dort mit der Braunkohle 6 innig vermischt. Dabei entsteht wiederum ein Feststoff-Flüssigkeit-Gemisch mit einem höheren Gehalt an Feststoffen als die Gülle 5, welches in der nachfolgenden Verfahrensstufe 8 in eine flüssige Phase 9 und einen ersten Feststoff 1 getrennt wird. Beim Mischen der Gülle 5 mit dem Konditionierungsmittel 6 werden bestimmte, insbesondere in der flüssigen Phase der Gülle 5 enthaltenen Substanzen an das Konditionierungsmittel 6, also die Braunkohle, gebunden. Die beiden in der Verfahrensstufe 8 anfallenden Komponenten, Feststoff 1 und flüssige Phase 9, entsprechen somit nicht mehr den Ausgangsstoffen Gülle 5 und Braunkohle 6, da ein großer Teil der Stoffe aus der flüssigen Phase der Gülle an die Braunkohlenpartikel angelagert worden ist, so daß letztere einen entsprechend großen Gehalt an diesen Stoffen bzw. an Umwandlungsprodukten derselben aufweist, wohingegen die flüssige Phase 9 einen merklich geringeren Gehalt an diesen Stoffen als die flüssige Phase der Gülle 5 enthält.

Eine erste Möglichkeit der Verwendung der flüssigen Phase 9 besteht beispielsweise darin, diese als vorgereinigte Gülle 10 beispielsweise auf Grünland zu verregnen. Eine erste Möglichkeit der Verwendung des Feststoffes 1 besteht beispielsweise darin, diesen als Bodenverbesserer einzusetzen.

Soll dagegen die in der Trenneinrichtung 8 anfallende flüssige Phase 9 zur weitergehenden Verringerung bestimmter Gehalte weiterbehandelt werden, wird die flüssige Phase zunächst einer Einrichtung 11 zugeführt, die mit einem belüfteten Festbettfilter versehen ist. In dieser Einrichtung 11 findet unter gleichzeitiger Zufuhr eines sauerstoffhaltigen Gases 12, vorzugsweise Luft, eine weitere Reinigung statt. Diese läuft in einem Behälter ab, der mit einem organischen Trägermaterial, z. B. Braunkohlenkoks, als Adsorptions- und Aufwuchsmedium für Bakterien gefüllt ist. Am Auslauf des Behälters tritt biologisch gereinigtes Wasser 14 aus. Eine für die adsorptive Reinigung geeignete Einrichtung 11 ist beispielsweise in der Veröffentlichung Frahne: "Biologische Reinigung von Industrieabwasser auf einem Festbettreaktor mittels eines Biofilters", CLB Chemie für Labor und Betrieb, 38. Jahrgang, Heft 8/1987, S. 403- 409 beschrieben.

Das so vorgereinigte Wasser 14 wird sodann einer Einrichtung 15 zur Vorfiltration zugeführt, bei der es sich vorzugsweise um eine Mikrofiltration oder Nanofiltration handelt. Dabei fallen ein flüssiges Filtrat 16 und breiartiger Rückstand 3 an.

Während dieser Rückstand 3 auf dem Weg über die Leitung 17 dem von der Trennstufe 8 kommenden Feststoff 1 zugeschlagen wird, fließt das Filtrat 16 in eine Einrichtung 18 zur Umkehrosmose, die aus zwei hintereinandergeschalteten Stufen I und II besteht. Zur Durchführung der Umkehrosmose in der Einrichtung 18 eignet sich beispielsweise die Scheibenmodultechnik, die in dem Prospekt der Firma ROCHEM für die Behandlung von Deponie-Sickerwasser vorbeschrieben ist. Bei der Behandlung des Filtrats 16 in der Stufe I werden ein Konzentrat 38 und ein Permeat 40 gewonnen. Letzteres kann entweder der Stufe II der Einrichtung 18 zugeführt werden oder über eine Leitung 19 an ein - nicht dargestelltes - Klärwerk zur weiteren Reinigung abgegeben werden.

Bei der Behandlung des Permeats 40 in der Stufe II entstehen wieder ein Konzentrat 42 und ein Permeat 44. Bei letzterem handelt es sich bereits um eine wässrige Flüssigkeit, die ohne weitere Behandlung nunmehr in einen Vorfluter eingeleitet werden kann. Das Konzentrat 42 wird hingegen über die Leitung 20 dem flüssigen Filtrat 16 zugefügt und erneut durch die Einrichtung zur Umkehrosmose 18 geleitet. Hierbei tritt eine Aufkonzentrierung der Substanzen nicht ein, weil aus der Stufe I der Einrichtung zur Umkehrosmose laufend das Konzentrat 38 abgezogen und der Einrichtung 21 zur Behandlung des Konzentrats zugeführt wird.

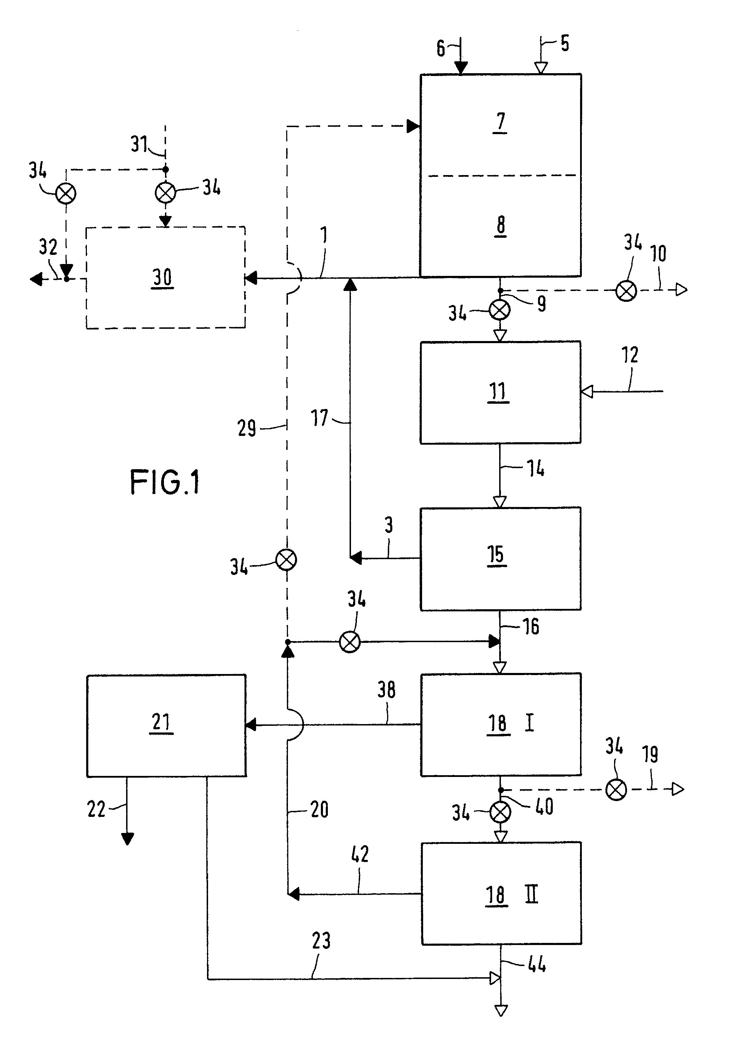

Zur Behandlung des Konzentrats 38 kann die Einrichtung 21 als Eindampfer ausgebildet sein. Beim Eindampfen werden wiederum ein Salz 22 und Wasser 23 erhalten. Das Salz 22 kann deponiert werden, während das Wasser 23, wie in Fig. 1 dargestellt, dem Permeat 44 zur Einleitung in den Vorfluter zugegeben wird.

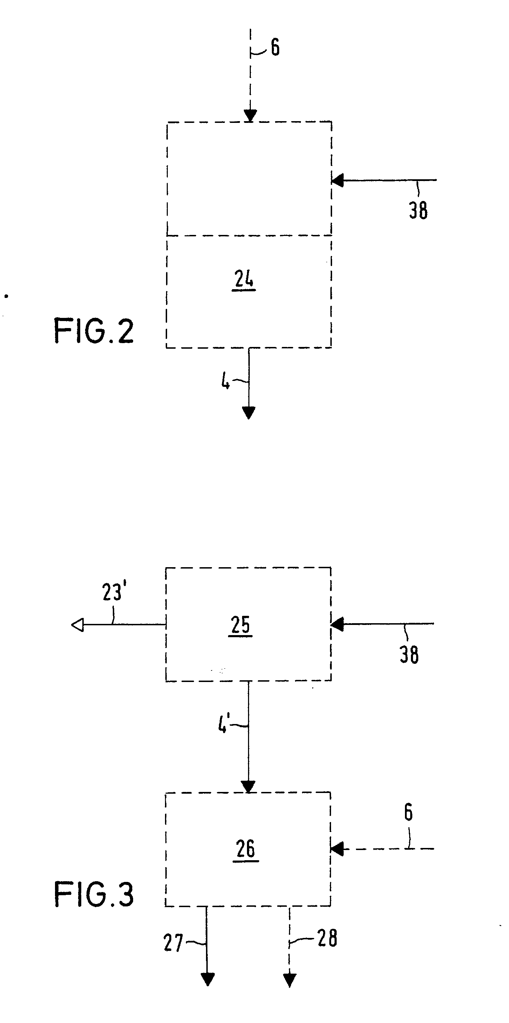

Die Fig. 2 und 3 zeigen zwei andere Möglichkeiten zur Behandlung des Konzentrats 38.

Gemäß der Ausführungsform der Fig. 2 wird das Konzentrat 38 zusammen mit einer solchen Menge Konditionierungsmittel 6 in einen Mischer 24 eingebracht, daß nach dem Vermischen ein Feststoff 4 entsteht, der den Feststoffen 1 und 3 zugeschlagen wird.

Bei der Verfahrensführung gemäß der Darstellung der Fig. 3 wird nur ein Teil des Konzentrats 38 in einer Teilverdampfungsstufe 25 eingedampft. Dabei entstehen wieder Wasser 23', welches dem Permeat 44 zugeführt werden kann, und ein Konzentrat 4'. Das in der Teilverdampfungsstufe 25 erhaltene Konzentrat 4' und das Wasser 23' sind den Substanzen 22 und 23 sehr ähnlich, die in der Eindampfeinrichtung 21 erhalten werden. Das Konzentrat 4' wird in einen Mischer 26 eingebracht, indem es mit dem bereits beschriebenen Konditionierungsmittel 6 vermischt wird. Der durch das Mischen erhaltene Stoff 27 kann entweder deponiert oder als Zuschlagsstoff 28 den Feststoffen 1 und 3 zugesetzt werden. Die Feststoffe 1, 3, 4 und 28 besitzen bereits die Eigenschaften von Bodenverbessereren und können ohne weiters als solche verwendet werden.

Anstelle des Rückführens des Konzentrats 42 in die Stufe I der Einrichtung 18 zur Durchführung der Umkehrosmose kann zumindest ein Teil des Konzentrats 42 über die Leitung 29 in den Mischer 7 gebracht und dort mit frischer Gülle 5 und Konditionierungsmittel 6 in dem geschilderte Ablauf neu durchgearbeitet werden. Bei dem Konditionierungsmittel 6 kann es sich in beiden Fällen um Braunkohle handeln, wobei ggf. auch noch weitere Substanzen Bestandteile des Konditionierungsmittels 6 sein können.

Die Mischung aus den Feststoffen 1, 3, 4 und 28 kann aber auch kompostiert werden. Dabei besteht die Möglichkeit, den Feststoff auch mit Hilfe von Zuschlagsstoffen 31 anzureichern. Das Kompostieren erfolgt in einer Kompostierungsstufe 30, in welche zum Beispiel NPK-haltige Zuschlagsstoffe 31 und/oder organische Stoffe eingebracht werden. Im Ergebnis wird aus der Kompostierungsstufe 30 ein lagerbares und verwendungsgerechtes Material 32 erhalten, das entweder als Düngemittel oder auch als Bodenverbesserer zum Einsatz auf eine der vorbeschriebenen Arten und Weisen gelangen kann. Alternativ können die Zuschlagsstoffe 31 dem erhaltenen Feststoff auch erst nach der Kompostierungsstufe 30 zugegeben werden.

Die Punkte 34 im Schaltbild gemäß Fig. 1 stellen jeweils umschaltbare Verzweigungen in dem beschriebenen Verfahrensschema dar.

In der nachfolgenden Tabelle werden beispielhaft die Verfahrensparameter bei der Behandlung von Schweinegülle unter Anwendung des Verfahrens gemäß der Erfindung aufgelistet. Die Differenzen der Werte in dieser Tabelle entsprechen jeweils der Reinigungsleistungen in den einzelnen Behandlungsstufen.

Beispiel Schweinegülle
Stufe

| | Inhaltsstoffe in Parametern | | |
|---|---|---|---|
| | $CSB*$ /mg $l^{-1}$ | $NH_4-N$ /mg $l^{-1}$ | P ges. /mg $l^{-1}$ |
| Einsatzstoff | 60 000 | 4 500 | 3 000 |
| Konditionierung 7,8 (mit Braunkohle) | 28 000 | 1 400 | 270 |
| Biologie 11 | 10 080 | 290 | 216 |
| Vorfiltration 15 (Mikrofiltration) | 8 570 | 280 | 205 |
| Umkehrosmose 18 (2-stufig) | 150 | 10 | 2 |
| = Auslaufwert Permeat II | | | |

* CSB = Chemischer Sauerstoff-Bedarf

Im folgenden wird ein Ausschnitt aus einer Mengenbilanz bei der Durchführung des erfindungsgemäßen Verfahrens angegeben. Einer Menge von 4m³/d Gülle 5 mit einem Trockensubstanzgehalt von 7 % werden 0,8 t/d Braunkohle 6 beigemischt. Dabei werden 1,8 t/d Feststoff 1 erhalten. Die flüssige Phase 9 wird der Vorfiltration 15 und Umkehrosmose 18 zugeführt. Dabei fallen 3 m³/d an Permeat 44 an. Aus der Stufe I der Umkehrosmose 18 werden 0,5 m³/d Konzentrat 38 abgezogen und einer der Konzentrat-Behandlungsstufen 21, 24, 25/26 zugeführt. Dabei entstehen 0,05 m³/d Salze 22 und 0,45 m³/d Wasser 23, welches dem Permeat 44 zugeschlagen wird, so daß insgesamt 3,45 m³/d Abwasser vorflutergerecht abgegeben werden können.

Die 1,8 t/d Feststoff 1 werden einer Kompostierung 30 zugeführt, welcher auch der Feststoff 3 zugeschlagen wird. Dabei werden als Ergebnis 1,2 t/d rieselfähiger Bodenverbesserer 32 erhalten.

**Patentansprüche**

1. Verfahren zum Behandeln von Gülle (5) mit einem feinkörnigen, schüttfähigen, kohlenstoffhaltigen Material, dadurch gekennzeichnet, daß die Gülle (5) mit Huminsäure enthaltenden Stoffen, insbesondere Braunkohle (6) vermischt und danach die Feststoffe (1) von der flüssigen Phase (9) des Gemisches abgetrennt werden.

2. Verfahren nach Anspruch 1, dadurch gekennzeichnet, daß die Gülle (5) mit Rohbraunkohle vermischt wird.

3. Verfahren nach Anspruch 1, dadurch gekennzeichnet, daß die Gülle (5) mit vorgetrockneter Braunkohle vermischt wird.

4. Verfahren nach Anspruch 1, dadurch gekennzeichnet, daß die Gülle (5) mit 1 - 25 Gew.-%, vorzugsweise 5 - 15 Gew.-% Braunkohle (6) vermischt wird.

5. Verfahren nach Anspruch 1, dadurch gekennzeichnet, daß Braunkohle (6) mit einer Korngröße bis zu 10 mm verwendet wird.

6. Verfahren nach Anspruch 1, dadurch gekennzeichnet, daß die Trennung des Feststoffes (1) von der

EP 0 449 184 A1

flüssigen Phase des Gemisches nach einer Verweilzeit der Braunkohle (6) in der Gülle von 2 - 120 min., vorzugsweise 15 - 45 min. erfolgt.

7. Verfahren nach Anspruch 6, dadurch gekennzeichnet, daß das Gemisch aus Gülle (5) und Braunkohle (6) zumindest auch während eines Teils der Verweilzeit gerührt wird.

8. Verfahren nach Anspruch 1, dadurch gekennzeichnet, daß der aus dem Gemisch abgetrennte Feststoff (1) vor der Weiterverwendung einer Trocknung unterzogen wird.

9. Verfahren nach Anspruch 1, dadurch gekennzeichnet, daß der aus dem Gemisch abgetrennte Feststoff (1) einer Kompostierung unterzogen wird.

10. Verfahren nach Anspruch 1, dadurch gekennzeichnet, daß die flüssige Phase (9) des Gemisches nach Abtrennen des Feststoffes (1) verregnet wird.

11. Verfahren nach Anspruch 1, dadurch gekennzeichnet, daß die flüssige Phase (9) nach Abtrennen des Feststoffes (1) einer der oder aufeinanderfolgend wenigstens zwei der nachfolgenden Behandlungen unterzogen wird:
   - Reinigung unter Zufuhr eines sauerstoffhaltigen Gases, vorzugsweise Luft (12),
   - Vorfiltration unter Abtrennung eines flüssigen Filtrats (16) und eines Feststoffes (3),
   - Umkehrosmose des flüssigen Filtrats (16) in mindestens einer Stufe (I) unter Abtrennung eines ersten flüssigen Permeats (40) und eines ersten Konzentrats (38),
   - Eindampfen des ersten Konzentrats (38) unter Bildung von Salz (22) und Wasser (23) und/oder Behandeln des ersten Konzentrats (38) mit einem feinkörnigen, schüttfähigen kohlenstoffhaltigen Material (6), vorzugsweise Huminsäure enthaltender Braunkohle unter Bildung eines Feststoffes (4) und/oder eines deponierbaren Stoffes (27).

12. Verfahren nach Anspruch 11, dadurch gekennzeichnet, daß wenigstens die in den späteren Verfahrensstufen gewonnenen Stoffe (3, 4, 28) dem aus dem Gemisch aus Gülle (5) und Braunkohle (6) abgetrennten Feststoff (1) zugeschlagen werden und die Stoffe (1, 3, 4, 28) gemeinsam weiterbehandelt und/oder verwendet werden.

13. Verfahren nach Anspruch 9, dadurch gekennzeichnet, daß das Kompostieren Stoffe (1, 4, 28) unter Zugabe von wenigstens einem Zuschlagsstoff (31) in Form von Stickstoff-, Phosphor- und Kaliverbindungen durchgeführt wird.

14. Verfahren nach Anspruch 11, dadurch gekennzeichnet, daß das flüssige Filtrat (16) einer zweistufigen Umkehrosmose (I, II) unterzogen wird und aus der zweiten Stufe (II) ein zweites Konzentrat (42) und ein zweites Permeat (44) gewonnen werden.

15. Verfahren nach Anspruch 14, dadurch gekennzeichnet, daß wenigstens ein Teil des zweiten Konzentrats (42) in die erste Stufe (I) der Umkehrosmose zurückgeführt wird.

16. Verfahren nach Anspruch 14, dadurch gekennzeichnet, daß wenigstens ein Teil des zweiten Konzentrats (42) der Gülle (5) beigemischt wird.

17. Verfahren nach Anspruch 14, dadurch gekennzeichnet, daß das zweite Permeat (44) an den Vorfluter abgegeben wird.

18. Verfahren nach Anspruch 11, dadurch gekennzeichnet, daß das Permeat (40) aus der ersten Stufe der Umkehrosmose der weiteren Reinigung in einem Klärwerk zugeführt wird.

7

FIG.1

FIG.2

FIG.3

| | EINSCHLÄGIGE DOKUMENTE | | EP 91104703.3 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl⁵)** |
| A | PATENT ABSTRACTS OF JAPAN, unexamined applications, Sektion C, Band 10, Nr. 366, 6. Dezember 1986 THE PATENT OFFICE JAPANESE GOVERNMENT Seite 33 C 390 * Kokai-No. 61-161 200 (TAKUMA) * | 1,9 | C 02 F 1/28 C 02 F 9/00 C 02 F 1/44 C 05 F 3/00 C 05 F 11/02 |
| A | PATENT ABSTRACTS OF JAPAN, unexamined applications, Sektion C, Band 7, Nr. 271, 28. Juli 1983 THE PATENT OFFICE JAPANESE GOVERNMENT Seite 111 C 178 * Kokai-Nr. 58-79 509 (MASAO WATANABE) * | 1,9 | |
| A | US - A - 4 127 964 (MEE) * Anspruch 1 * | 1,9 | **RECHERCHIERTE SACHGEBIETE (Int Cl⁵)** |
| A | DE - C2 - 3 309 004 (SCHRÖDER) * Anspruch 1; Spalte 2, Zeilen 51-53 * | 1,9 | C 02 F C 05 F |
| A | EP - A2 - 0 149 796 (SCHRÖDER) * Zusammenfassung * | 1,9 | |
| A | EP - A2 - 0 352 219 (SANDOZ) * Gesamt * | 11 | |
| A | EP - A1 - 0 159 246 (CHRIST) * Gesamt * | 11 | |

Der vorliegende Recherchenbericht wurde für alle Patentansprüche erstellt.

| Recherchenort | Abschlußdatum der Recherche | Prüfer |
|---|---|---|
| WIEN | 20-06-1991 | WILFLINGER |

| EINSCHLÄGIGE DOKUMENTE | | | |
|---|---|---|---|
| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
| A | -- <br> AT - B - 361 410 <br> (BUCKAUR. WOLF) <br> * Seite 3, Zeilen 15-44 * <br> ---- | 11 | |
| | | | RECHERCHIERTE SACHGEBIETE (Int Cl⁵) |

Der vorliegende Recherchenbericht wurde für alle Patentanspruche erstellt

| Recherchenort | Abschlußdatum der Recherche | Prufer |
|---|---|---|
| WIEN | 20-06-1991 | WILFLINGER |

KATEGORIE DER GENANNTEN DOKUMENTEN
X : von besonderer Bedeutung allein betrachtet
Y : von besonderer Bedeutung in Verbindung mit einer
anderen Veroffentlichung derselben Kategorie
A : technologischer Hintergrund
O : nichtschriftliche Offenbarung
P : Zwischenliteratur
T : der Erfindung zugrunde liegende Theorien oder Grundsatze

E : alteres Patentdokument, das jedoch erst am oder
nach dem Anmeldedatum veroffentlicht worden ist
D : in der Anmeldung angefuhrtes Dokument
L : aus andern Grunden angefuhrtes Dokument

& : Mitglied der gleichen Patentfamilie, ubereinstimmendes Dokument

EPA Form 1503 03 82